# EUROPEAN PATENT APPLICATION

(11) **EP 4 611 221 A1**
(43) Date of publication of application: **03.09.2025**
(21) Application number: 22963529.7
(22) Date of filing: 28.10.2022
(51) Int. Cl.: H02K 1/276, H02K 1/279

(54) **MOTOR**

(71) Applicant: Minebea Mitsumi Inc., Kitasaku-gun, Nagano 3890293 (JP)
(72) Inventor: YAMADA, Takuji, Kitasaku-gun, Nagano 389-0293 (JP); WATANABE, Toru, Kitasaku-gun, Nagano 389-0293 (JP)
(74) Representative: Winter, Brandl - Partnerschaft mbB
(86) International application number: PCT/JP2022/040414
(87) International publication number: WO 2024/089882

(57) **Abstract**

A motor (1) includes a shaft (2), a rotor (4), and a stator (3). The rotor (4) includes a yoke (41), and a first magnet (42a) and a second magnet (42b) arranged in a circumferential direction (C), the first magnet (42a) and the second magnet (42b) are present inside the yoke (41), and an end part (42a1) of the first magnet (42a) at an opposite side to the stator (3) is present at an opposite side to the stator (3) with respect to an end part (42b1) of the second magnet (42b) at an opposite side to the stator (3), in a radial direction (R).

## Description

### Technical Field

The present invention relates to a motor.

### Background Art

A motor of what is called a Halbach array is known. In the motor of the Halbach array, a plurality of magnets having different orientations of magnetic fluxes arranged at a surface of a rotor yoke (see, for example, Patent Literature 1).

### Citation List

### Patent Literature

Patent Literature 1: JP 2007-006545 A

### Summary of Invention

### Technical Problem

However, the motor described above has room for improvement in terms of improvement in output torque.

In view of the above problem, the present invention provides a motor that can improve output torque.

### Solution to Problem

In order to solve the above-described problem and achieve the object, a motor according to the present invention includes a shaft, a rotor, and a stator. The rotor includes a yoke, and a first magnet and a second magnet arranged in a circumferential direction, the first magnet and the second magnet are present inside the yoke, and an end part of the first magnet at an opposite side to the stator is present at an opposite side to the stator with respect to an end part of the second magnet at an opposite side to the stator in a radial direction.

According to one aspect, the output torque of the motor can be improved.

### Brief Description of Drawings

FIG. 1 is a plan view of a motor according to a first embodiment.
FIG. 2 is a perspective view of the motor illustrated in FIG. 1.
FIG. 3 is a perspective view of a rotor included in the motor illustrated in FIG. 1.
FIG. 4 is a perspective view illustrating a part of a yoke included in the rotor illustrated in FIG. 3.
FIG. 5 is a plan view illustrating a part of the motor illustrated in FIG. 1.
FIG. 6 is a plan view illustrating orientations of magnetic fluxes of a plurality of magnets included in the motor illustrated in FIG. 1.
FIG. 7 is a plan view of a motor according to a first variation of the first embodiment.
FIG. 8 is a perspective view of a rotor included in the motor illustrated in FIG. 7.
FIG. 9 is a plan view illustrating a part of a motor according to a second embodiment.

### Description of Embodiments

Hereinafter, a motor according to an embodiment will be described in detail with reference to the drawings. Note that the dimensional relationship between elements and the scale of each element in the drawings may differ from reality. The drawings may include parts with dimensional relationships and scales different from each other between drawings.

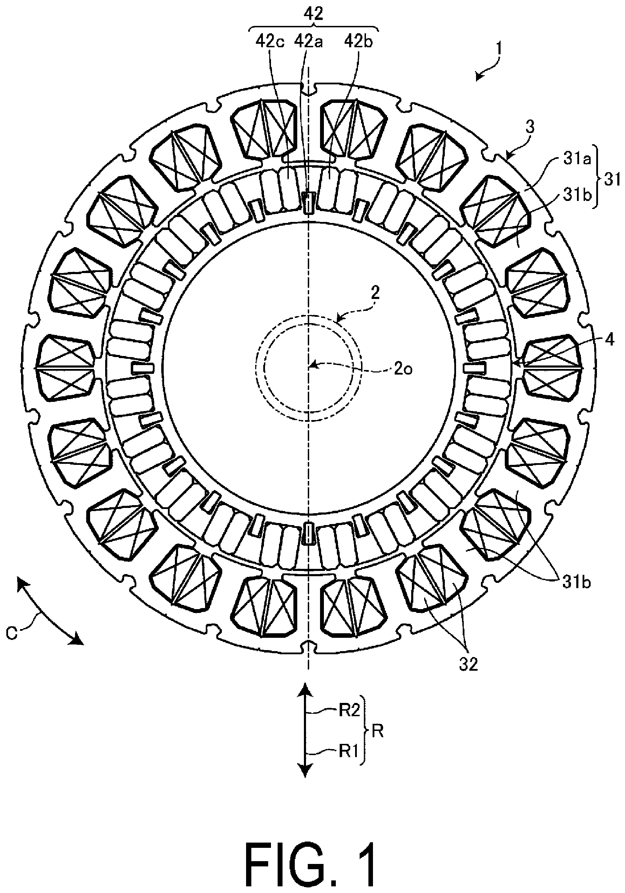

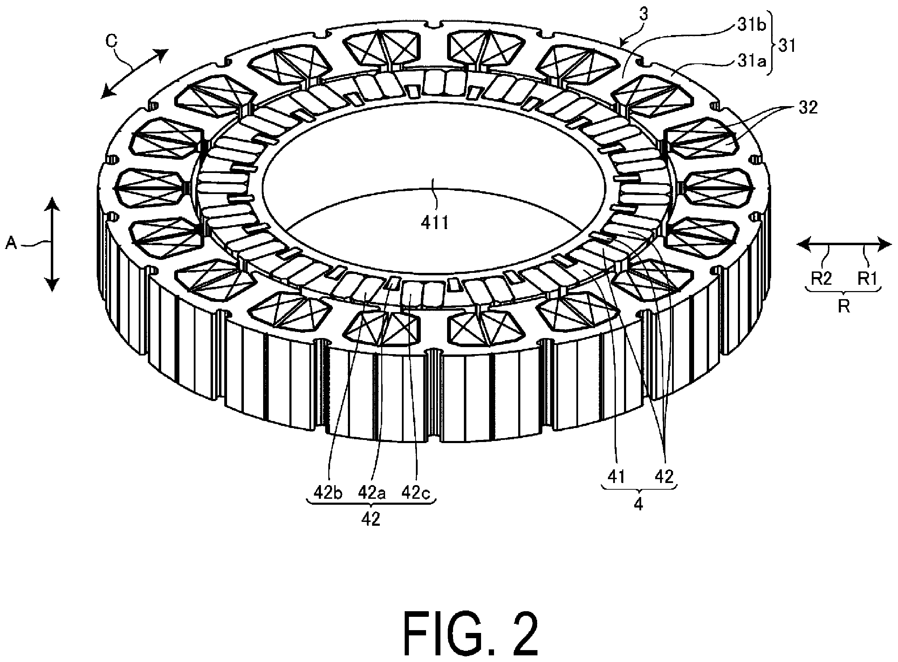

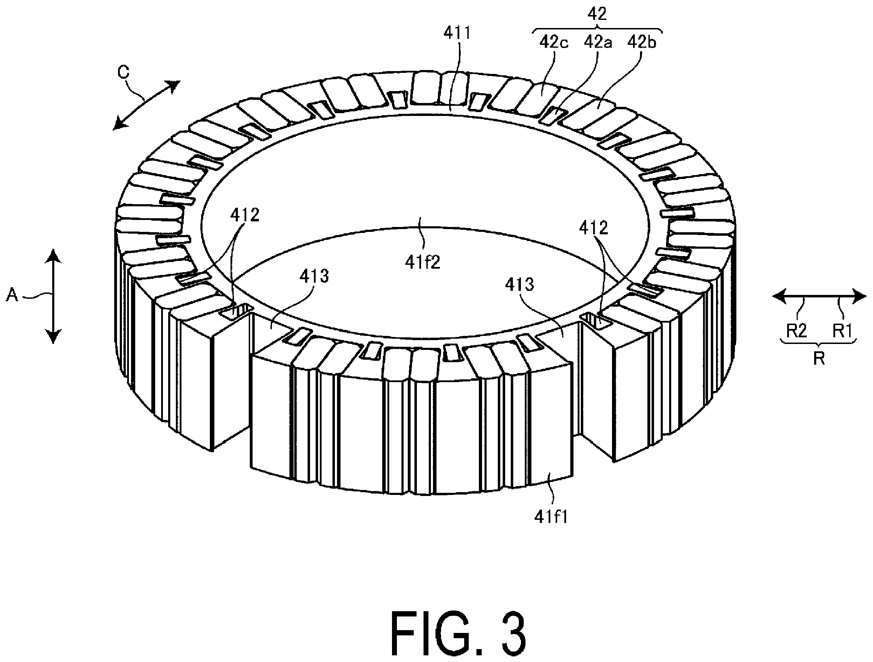

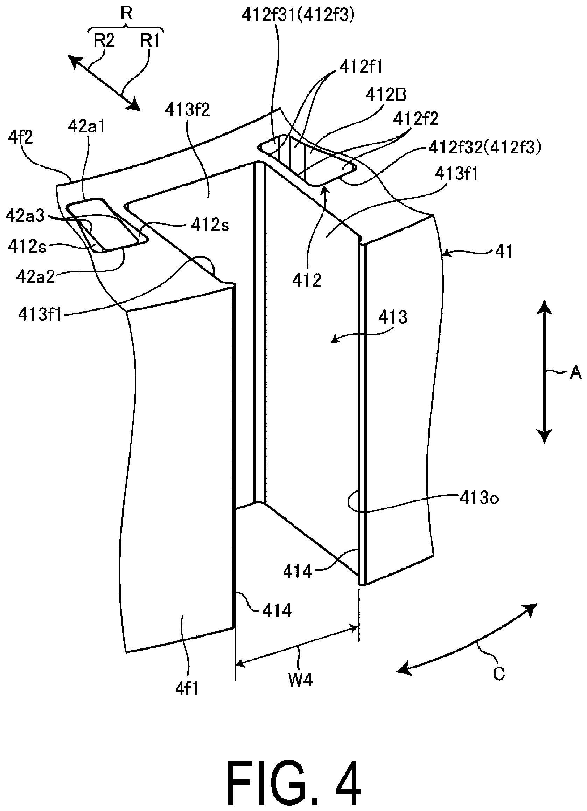

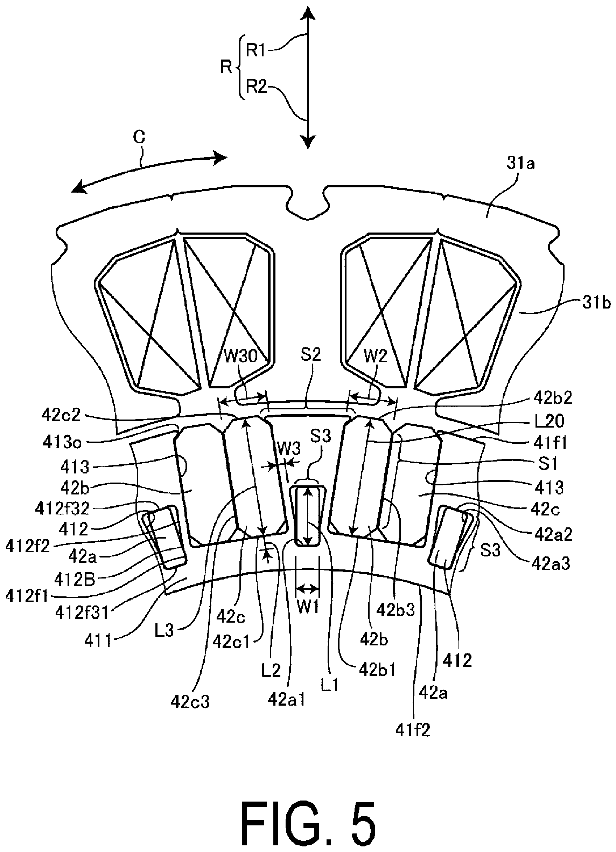

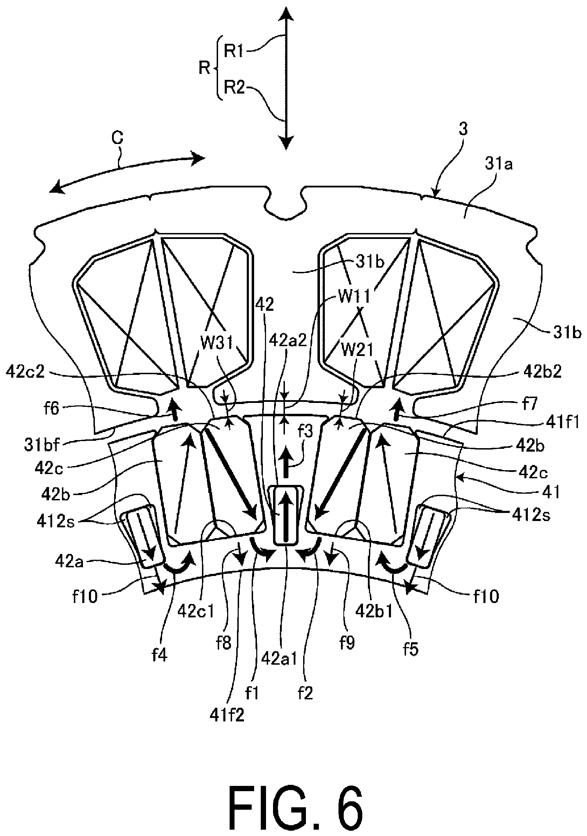

FIG. 1 is a plan view of a motor 1 according to the first embodiment. FIG. 2 is a perspective view of the motor 1 illustrated in FIG. 1. FIG. 3 is a perspective view of a rotor 4 included in the motor 1 illustrated in FIG. 1. FIG. 4 is a perspective view illustrating a part of a yoke 41 included in the rotor 4 illustrated in FIG. 3. FIG. 5 is a plan view illustrating a part of the motor 1 illustrated in FIG. 1. FIG. 6 is a plan view illustrating orientations of magnetic fluxes of a plurality of magnets 42 included in the motor 1 illustrated in FIG. 1. Note that in FIGS. 1, 2, 5, and 6, × positioned on both sides of teeth 31b described below is illustrated by omitting a winding forming a coil 32 by being wound around the teeth 31b.

### First Embodiment

In the following description of the motor 1 according to the first embodiment, in order to facilitate understanding of directions, a direction of the shaft 2 described below extending is called an axial direction A, a direction of the rotor 4 described below rotating is called a circumferential direction C, and a direction included in a plane orthogonal to the axial direction A, passing through an axis 2o of the shaft 2, and orthogonal to the circumferential direction C is called a radial direction R.

The motor 1 illustrated in FIG. 1 according to the first embodiment is an inner rotor type as described below, and when viewed from the axial direction A, with reference to the rotor 4, a stator 3 is positioned outside the radial direction R of the rotor 4 while the shaft 2 is positioned inside the radial direction R of the rotor 4. In the motor 1 according to the present embodiment, the outside in the radial direction R is called a stator side R1, and the inside in the radial direction R is called an opposite side R2 to the stator 3. In FIGS. 1 to 6, the stator side in the radial direction R is indicated by R1, and the opposite side to the stator 3 in the radial direction R is indicated by R2. Note that FIG. 3 illustrates the rotor 4 with a part of the plurality of magnets 42 described below omitted. Furthermore, for ease of description, the shaft 2 is indicated by an imaginary line in FIG. 1, and the shaft 2 is omitted in other drawings.

The motor 1 according to the first embodiment is an electric motor for converting electric energy, for example, from a power source into a driving force rotating in the circumferential direction C of the shaft 2. As illustrated in FIG. 2, for example, the motor 1 according to the present embodiment is what is called a flat motor having a length in the radial direction R of the stator 3 longer than a length in the axial direction A of the stator 3 described below. The motor 1 is accommodated in a frame not illustrated, for example.

As illustrated in FIG. 1, for example, the motor 1 includes the shaft 2, the stator 3, and the rotor 4. The shaft 2 is what is called a rotation shaft and is formed in a columnar shape extending along the axial direction A by a metal member, for example. The shaft 2 includes the axis 2o and is provided rotatably about the axis 2o. The shaft 2 transmits power to the outside by rotating in the circumferential direction C.

The stator 3 is a part generating a force for rotating the rotor 4 in the circumferential direction C. The stator 3 includes a core 31, an insulator not illustrated, and the coil 32.

The core 31 is formed by stacking plate-shaped metal members such as a silicon steel plate, an electromagnetic steel plate, and a soft magnetic steel plate in the axial direction A and has magnetism. The core 31 according to the present embodiment includes a main body 31a and the teeth 31b. The main body 31a is formed in an annular shape when viewed from the axial direction A. The teeth 31b are formed to protrude from an inner peripheral surface of the main body 31a to the rotor 4 side in the radial direction R. The stator 3 according to the present embodiment includes, for example, 18 teeth 31b.

The insulator is made of, for example, an insulation resin or the like and is mounted to the surface of the core 31. The coil 32 is formed by winding, for example, a winding around the teeth 31b via the insulator. The winding includes a conductive core wire (not illustrated) and an insulation covering part (not illustrated) covering the periphery of the core wire. The stator 3 according to the present embodiment includes, for example, 18 coils 32.

The rotor 4 is provided rotatably about the axis 2o of the shaft 2 being a rotation shaft. In the motor 1 according to the present embodiment, the shaft 2 and the rotor 4 are integrally formed.

The rotor 4 is arranged, for example, inside the stator 3 (the shaft 2 side) in the radial direction R. That is, this motor 1 is an inner rotor type brushless motor having the rotor 4 positioned inside in the radial direction R of the stator 3.

As illustrated in FIG. 2, the rotor 4 includes a yoke 41 and the plurality of magnets 42. The yoke 41 is made of, for example, a magnetic material such as iron.

The magnet 42 includes, for example, a permanent magnet. The plurality of magnets 42 are arranged along the circumferential direction C, for example. The plurality of magnets 42 include, for example, 20 first magnets 42a, 20 second magnets 42b, and 20 third magnets 42c.

The first magnet 42a is what is called a main magnet. The second magnet 42b and the third magnet 42c are what is called sub magnets. In the yoke 41 according to the present embodiment, the second magnet 42b is arranged at one side in the circumferential direction C of the first magnet 42a, and the third magnet 42c is arranged at the other side in the circumferential direction C of the first magnet 42a.

The yoke 41 has a function as a passage of a magnetic flux between the first magnet 42a and the second magnet 42b and has a function as a passage of a magnetic flux between the first magnet 42a and the third magnet 42c.

As illustrated in FIG. 3, the yoke 41 includes a main body 411, a hole 412, and a frame 413. The main body 411 is formed to extend along the circumferential direction C. That is, the main body 411 is formed in a tubular shape. The yoke 41 includes an outer peripheral surface 41f1 positioned at the stator side R1 in the radial direction R and an inner peripheral surface 41f2 positioned at the opposite side R2 to the stator 3 in the radial direction R.

A plurality of the holes 412 are formed at the main body 411. The plurality of holes 412 are arranged at equal intervals along the circumferential direction C. The hole 412 is formed to penetrate the main body 411 in the axial direction A. The plurality of holes 412 have a constant distance from the axis 2o and are arranged at regular intervals along the circumferential direction C. The hole 412 is arranged closer to the inner peripheral surface 41f2 than the outer peripheral surface 41f1 of the yoke 41 in the radial direction R.

Next, the shape of the hole 412 will be described. For example, as illustrated in FIG. 4, the hole 412 has three sets of inner surfaces 412f1, 412f2, and 412f3 opposing one another when viewed from the axial direction A. More specifically, the hole 412 includes a pair of the first inner surfaces 412f1 opposing each other in the circumferential direction C, a pair of the second inner surfaces 412f2 opposing each other in the circumferential direction C, and a pair of the third inner surfaces 412f3 opposing each other in the radial direction R. In other words, when viewed from the axial direction A, the hole 412 is formed with the entire circumference surrounded by the inner surfaces 412f1, 412f2, and 412f3 of a wall part constituting the yoke 41. The first magnet 42a is arranged inside each of the holes 412.

The pair of first inner surfaces 412f1 are arranged at the opposite side R2 to the stator 3 in the radial direction R (i.e., the inner peripheral surface 41f2 side of the yoke 41) in the hole 412. The pair of first inner surfaces 412f1 are arranged in parallel to each other. Each of the pair of first inner surfaces 412f1 is parallel to a center line 1CL described below.

The pair of second inner surfaces 412f2 are arranged at the stator side R1 in the radial direction R (i.e., the outer peripheral surface 41f1 side of the yoke 41) in the hole 412. Then, the pair of second inner surfaces 412f2 are arranged to be inclined in an aspect of being separated from each other toward the stator side R1. Each of the pair of second inner surfaces 412f2 is inclined with respect to the center line 1CL described below.

One third inner surface 412f32 of the pair of third inner surfaces 412f3 is arranged at the stator side R1 in the radial direction R in the hole 412. The other third inner surface 412f31 of a pair of third inner surfaces 412f3 is arranged at the opposite side R2 to the stator 3 in the radial direction R in the hole 412.

In the radial direction R, a boundary 412B between the pair of first inner surfaces 412f1 and the pair of second inner surfaces 412f2 is arranged as illustrated in FIG. 5 at the position in the radial direction R being substantially the same as the position of a first end part 42b1 of the second magnet 42b at the opposite side R2 to the stator 3. Similarly, the boundary 412B is arranged at the position in the radial direction R being substantially the same as the position of a first end part 42c1 of the third magnet 42c at the opposite side R2 to the stator 3.

As illustrated in FIG. 3, a plurality of the frames 413 are formed at the main body 411. The plurality of frames 413 have a constant distance from the axis 2o, for example, and are arranged at regular intervals along the circumferential direction C.

The frames 413 are arranged to surround the hole 412 when viewed from the axial direction A. More specifically, as illustrated in FIG. 5, two frames 413 are arranged at both sides in the circumferential direction C of the hole 412, with a part of the hole 412 at the stator side R1 and a part of the frame 413 at the opposite side R2 to the stator 3 opposing each other. In other words, when viewed from the axial direction A, as illustrated in FIG. 4, the frame 413 is formed to have a pair of first inner surfaces 413f1 opposing each other in the circumferential direction C and a second inner surface 413f2 coupling the pair of first inner surfaces 413f1 with respect to the wall part constituting the yoke 41, and three sides excluding the stator side R1 in the radial direction R are surrounded by the pair of first inner surfaces 413f1 and the second inner surface 413f2. The above-described frame 413 is formed to penetrate the main body 411 in the axial direction A.

A side surface 42b3 of the second magnet 42b or a side surface 42c3 of the third magnet 42c comes into contact with the first inner surface 413f1. The first end part 42b1 of the second magnet 42b or the first end part 42c1 of the third magnet 42c comes into contact with the second inner surface 413f2.

The frame 413 includes an opening 413o connecting the outside of the yoke 41 and the inside of the frame 413, in the radial direction R. In other words, the frame 413 is arranged with the opening 413o being formed at the outer peripheral surface 41f1 of the yoke 41. That is, the frame 413 is arranged at the stator side R1 side in the radial direction R of the rotor 4.

Furthermore, the frame 413 includes a pair of protrusion parts 414 being a portion where the opening 413o is formed and protruding to come close to each other inside the frame 413. In other words, the protrusion part 414 protrudes from the first inner surface 413f1 toward the inside of the frame 413 along the circumferential direction C. The protrusion part 414 protrudes in the circumferential direction C from the main body 411. Inside each of the frames 413, the second magnet 42b and the third magnet 42c are arranged (see FIG. 5). As described above, since the protrusion part 414 protrudes from the first inner surface 413f1 toward the inside of the frame 413 along the circumferential direction C, the protrusion part 414 restricts the second magnet 42b and the third magnet 42c from moving to the stator side R1 in the radial direction R. That is, the protrusion part 414 has a function as an engaging part engaging with the second magnet 42b and the third magnet 42c.

The first magnet 42a is formed in, for example, a cuboid shape. As illustrated in FIG. 5, the first magnet 42a includes a first end part (end part) 42a1 at the opposite side R2 to the stator 3 and a second end part (end part) 42a2 at the stator side R1, in the radial direction R. Any one of the first end part 42a1 and the second end part 42a2 is an N pole, and the other is an S pole. The first magnet 42a includes both side surfaces 42a3 opposing each other in the circumferential direction C. The both side surfaces 42a3 are parallel to each other and parallel to the center line 1CL described below. The first magnet 42a is arranged closer to the inner peripheral surface 41f2 than the outer peripheral surface 41f1 of the yoke 41 in the radial direction R.

The second magnet 42b is formed in, for example, a cuboid shape. The second magnet 42b includes the first end part (end part) 42b1 at the opposite side R2 to the stator 3 and a second end part (end part) 42b2 at the stator side R1 in the radial direction R. Any one of the first end part 42b1 and the second end part 42b2 is an N pole, and the other is an S pole. The second magnet 42b includes the both side surfaces 42b3 opposing each other in the circumferential direction C. The both side surfaces 42b3 are parallel to each other and parallel to the center line 1CL described below. The second magnet 42b according to the present embodiment has the area wider than the area of the first magnet 42a, when viewed from the axial direction A. The second magnet 42b is arranged to be partially exposed from the opening 413o positioned at the stator side R1 in the radial direction R.

The third magnet 42c is formed in, for example, a cuboid shape. The third magnet 42c includes the first end part (end part) 42c1 at the opposite side R2 to the stator 3 and a second end part (end part) 42c2 at the stator side R1 in the radial direction R. Any one of the first end part 42c1 and the second end part 42c2 is an N pole, and the other is an S pole. The third magnet 42c includes the both side surfaces 42c3 opposing each other in the circumferential direction C. The both side surfaces 42c3 are parallel to each other and parallel to the center line 1CL described below. The third magnet 42c according to the present embodiment has the area wider than the area of the first magnet 42a, when viewed from the axial direction A. The third magnet 42c is arranged to be partially exposed from the opening 413o positioned at the stator side R1 in the radial direction R.

Since the number of each of the first magnet 42a, the second magnet 42b, and the third magnet 42c is 20, the number of magnetic poles of the rotor 4 according to the present embodiment is 60.

As illustrated in FIG. 1, the second magnet 42b and the third magnet 42c are arranged to be line-symmetric with respect to the center line 1CL passing through the center in the circumferential direction C of the first magnet 42a and the axis 2o of the shaft 2. The second magnet 42b is formed in the same shape as the shape of the third magnet 42c, for example. Furthermore, the length in the axial direction A of the first magnet 42a, the length in the axial direction A of the second magnet 42b, and the length in the axial direction A of the third magnet 42c are the same. Moreover, first magnet 42a, the second magnet 42b, and the third magnet 42c are arranged inside the yoke 41.

A length L1 in the radial direction R of the first magnet 42a illustrated in FIG. 5 is shorter than a length L20 in the radial direction R of the second magnet 42b, for example. The length L1 in the radial direction R of the first magnet 42a is shorter than a length L3 in the radial direction R of the third magnet 42c, for example. Furthermore, a width W1 orthogonal to the radial direction R of the first magnet 42a is narrower than a width W2 orthogonal to the radial direction R of the second magnet 42b. Furthermore, the width W1 orthogonal to the radial direction R of the first magnet 42a is narrower than a width W30 orthogonal to the radial direction R of the third magnet 42c.

An interval W4 in the circumferential direction C at the pair of protrusion parts 414 illustrated in FIG. 4 is narrower than the sum of the width W2 of the second magnet 42b and the width W30 of the third magnet 42c. Therefore, when the rotor 4 is rotated in the circumferential direction C, the pair of protrusion parts 414 can prevent the second magnet 42b and the third magnet 42c from being detached from the yoke 41.

A first gap G1 is formed between the outer peripheral surface 41f1 of the yoke 41 illustrated in FIG. 6 and an inner peripheral surface 31bf of the teeth 31b. The width in the radial direction R of the first gap G1 is W11. A second gap G2 is formed between the second end part 42b2 at the stator side R1 of the second magnet 42b and the inner peripheral surface 31bf of the teeth 31b. The width in the radial direction R of the second gap G2 is W21. Furthermore, a third gap G3 is formed between the second end part 42c2 at the stator side R1 of the third magnet 42c and the inner peripheral surface 31bf of the teeth 31b. The width in the radial direction R of the third gap G3 is W31.

The second magnet 42b is arranged with the width W11 of the first gap G1 and the width W21 of the second gap G2 being the same in the radial direction R. In addition, the third magnet 42c is arranged with the width W11 of the first gap G1 and the width W31 of the third gap G3 being the same in the radial direction R. That is, when the shaft 2 and the rotor 4 are rotated in the circumferential direction C with respect to the stator 3 being stationary, a gap having a constant width is formed between the rotor 4 and the stator 3 in the radial direction R.

The orientation of the magnetic flux of the first magnet 42a is, for example, along the radial direction R. More specifically, the orientation of the magnetic flux of the first magnet 42a is along the stator side R1 in the radial direction R or along the opposite side R2 to the stator 3 in the radial direction R.

The orientation of the magnetic flux of the second magnet 42b is, for example, inclined with respect to the radial direction R. More specifically, the orientation of the magnetic flux of the second magnet 42b is inclined to gradually come close to the first magnet 42a in the circumferential direction C toward the opposite side R2 to the stator 3 or is inclined to gradually separate from the first magnet 42a in the circumferential direction C toward the stator side R1.

The orientation of the magnetic flux of the third magnet 42c is, for example, inclined with respect to the radial direction R. More specifically, the orientation of the magnetic flux of the third magnet 42c is inclined to gradually come close to the first magnet 42a in the circumferential direction C toward the opposite side R2 to the stator 3 or is inclined to gradually separate from the first magnet 42a in the circumferential direction C toward the stator side R1.

In other words, the orientation of the magnetic flux of the second magnet 42b and the orientation of the magnetic flux of the third magnet 42c are inclined with the distance between the magnetic flux of the second magnet 42b and the magnetic flux of the third magnet 42c in the circumferential direction C becoming shorter toward the opposite side R2 to the stator 3 or are inclined with the distance between the magnetic flux of the second magnet 42b and the magnetic flux of the third magnet 42c in the circumferential direction C becoming longer toward the stator side R1.

As described above, since the orientation of the magnetic flux of the first magnet 42a, the orientation of the magnetic flux of the second magnet 42b, and the orientation of the magnetic flux of the third magnet 42c are different from one another, the rotor 4 according to the present embodiment is the rotor 4 of what is called a Halbach array. In the rotor 4, the first magnet 42a, the second magnet 42b, and the third magnet 42c are arranged with the orientations of the magnetic fluxes being different from one another.

In the radial direction R, the first end part 42a1 of the first magnet 42a at the opposite side R2 to the stator 3 protrudes with respect to the first end part 42b1 of the second magnet 42b at the opposite side R2 to the stator 3 illustrated in FIG. 5. In other words, in the radial direction R, with respect to the first end part 42b1 of the second magnet 42b at the opposite side R2 to the stator 3, the first end part 42a1 of the first magnet 42a at the opposite side R2 to the stator 3 is present at the opposite side R2 to the stator 3. That is, the first end part 42a1 at the opposite side R2 to the stator 3 in the radial direction R of the first magnet 42a is closer to the inner peripheral surface 41f2 of the yoke 41 than the first end part 42b1 at the opposite side R2 to the stator 3 in the radial direction R of the second magnet 42b.

In the radial direction R, the second end part 42b2 of the second magnet 42b at the stator side R1 protrudes with respect to the second end part 42a2 of the first magnet 42a at the stator side R1. In other words, in the radial direction R, the second end part 42a2 of the first magnet 42a at the stator side R1 is present at the opposite side R2 to the stator 3 with respect to the second end part 42b2 of the second magnet 42b at the stator side R1. That is, the second end part 42a2 at the stator side R1 in the radial direction R of the first magnet 42a is farther by a predetermined distance from the outer peripheral surface 41f1 of the yoke 41 than the second end part 42b2 at the stator side R1 in the radial direction R of the second magnet 42b.

In the radial direction R, the first end part 42a1 of the first magnet 42a at the opposite side R2 to the stator 3 protrudes with respect to the first end part 42c1 of the third magnet 42c at the opposite side R2 to the stator 3. In other words, in the radial direction R, with respect to the first end part 42c1 of the third magnet 42c at the opposite side R2 to the stator 3, the first end part 42a1 of the first magnet 42a at the opposite side R2 to the stator 3 is present at the opposite side R2 to the stator 3. That is, the first end part 42a1 at the opposite side R2 to the stator 3 in the radial direction R of the first magnet 42a is closer to the inner peripheral surface 41f2 of the yoke 41 than the first end part 42c1 at the opposite side R2 to the stator 3 in the radial direction R of the third magnet 42c.

In the radial direction R, the second end part 42c2 of the third magnet 42c at the stator side R1 protrudes with respect to the second end part 42a2 of the first magnet 42a at the stator side R1. In other words, in the radial direction R, the second end part 42a2 of the first magnet 42a at the stator side R1 is present at the opposite side R2 to the stator 3 with respect to the second end part 42c2 of the third magnet 42c at the stator side R1. That is, the second end part 42a2 at the stator side R1 in the radial direction R of the first magnet 42a is farther by a predetermined distance from the outer peripheral surface 41f1 of the yoke 41 than the second end part 42c2 at the stator side R1 in the radial direction R of the third magnet 42c.

Regarding the first magnet 42a and the hole 412, the first end part 42a1 at the opposite side R2 to the stator 3 comes into contact with the third inner surface 412f31 of the hole 412 in the radial direction R. In addition, regarding the first magnet 42a and the hole 412, the second end part 42a2 at the stator side R1 comes into contact with the third inner surface 412f32 of the hole 412 in the radial direction R.

Regarding the first magnet 42a and the hole 412, at the opposite side R2 to the stator 3 in the radial direction R, the both side surfaces 42a3 of the first magnet 42a and the first inner surfaces 412f1 of the hole 412 come into contact with each other in the circumferential direction C. On the other hand, regarding the first magnet 42a and the hole 412, spaces 412s are arranged between the both side surfaces 42a3 of the first magnet 42a and the second inner surfaces 412f2 of the hole 412 at the stator side R1 in the radial direction R.

Air exists in the space 412s described above. The air is a nonmagnetic material, and magnetic permeability of the air is smaller than magnetic permeability of the magnetic material forming the yoke 41. That is, the air existing in the space 412s functions as a flux barrier suppressing the magnetic flux from the side surface 42b3 of the second magnet 42b toward the side surface 42a3 of the first magnet 42a and the magnetic flux from the side surface 42c3 of the third magnet 42c toward the side surface 42a3 of the first magnet 42a, in the circumferential direction C. Alternatively, the air existing in the space 412s functions as a flux barrier suppressing the magnetic flux from the side surface 42a3 of the first magnet 42a toward the side surface 42b3 of the second magnet 42b and the magnetic flux from the side surface 42a3 of the first magnet 42a toward the side surface 42c3 of the third magnet 42c, in the circumferential direction C.

Therefore, at a part with the space 412s, the magnetic flux from the side surface of one magnet 42 toward the side surface of the other magnet 42 in the circumferential direction C is suppressed by the air. The air is a nonmagnetic material. As a result, at a part with the space 412s, the magnetic fluxes are suppressed by the nonmagnetic material between the both side surfaces 42a3 in the circumferential direction C of the first magnet 42a and the both side surfaces 42b3 in the circumferential direction C of the second magnet 42b. Similarly, at a part with the space 412s, the magnetic fluxes are suppressed by the nonmagnetic material between the both side surfaces 42a3 in the circumferential direction C of the first magnet 42a and the both side surfaces 42c3 in the circumferential direction C of the third magnet 42c.

On the other hand, at parts with the both side surfaces 42a3 of the first magnet 42a coming into contact with the first inner surfaces 412f1 of the hole 412 in the circumferential direction C, the magnetic flux passes between the both side surfaces 42a3 of the first magnet 42a and the first end part 42c1 of the third magnet 42c.

The first magnet 42a is formed in a cuboid shape, and the pair of both side surfaces 42a3 opposing each other in the circumferential direction C are parallel, and each of the both side surfaces 42a3 is parallel to the center line 1CL. On the other hand, in the hole 412 described above, the pair of second inner surfaces 412f2 opposing each other in the circumferential direction C are formed to be inclined in an aspect of being separated from each other toward the stator side R1 in the radial direction R. The second inner surface 412f2 of the hole 412 is inclined with respect to the center line 1CL. That is, in the rotor 4 according to the present embodiment, the both side surfaces 42a3 of the first magnet 42a are inclined relative to the second inner surfaces 412f2 of the hole 412.

The rotor 4 according to the present embodiment satisfies L1/2 > L2, where in the radial direction R, as illustrated in FIG. 5, the length from the position of the second end part 42a2 at the opposite side R2 to the stator 3 of the first magnet 42a to the position of the second end part 42b2 at the opposite side R2 to the stator 3 of the second magnet 42b is L2. That is, in the radial direction R, the second end part 42a2 of the first magnet 42a protrudes with respect to the second end part 42b2 of the second magnet 42b by a protrusion amount (i.e., L2 is an offset amount), and the protrusion amount is smaller than half of the length L1 in the radial direction R of the first magnet 42a.

The surface area of the side surface 42b3 of the second magnet 42b extending in the radial direction R is S1. Furthermore, the surface area of a surface at the stator side R1 of the yoke 41 in the rotor 4 is S2. The surface extends in the circumferential direction C. Moreover, when the number of magnetic poles of the rotor 4 (the number of magnetic poles of the rotor 4 according to the present embodiment is 60) is P, the rotor 4 according to the present embodiment satisfies S1 > S2/P.

The rotor 4 according to the present embodiment satisfies S1/2 > S3, where the surface area of a surface at the stator side R1 of the first magnet 42a is S3. The surface extends in the circumferential direction C.

The rotor 4 according to the present embodiment satisfies W2 ≥ W1 > W3, where the width of the first magnet 42a is W1 in the circumferential direction C, the width of the second magnet 42b is W2 in the circumferential direction C, and the width of the frame 413 is W3 in the circumferential direction C.

In the rotor 4 according to the present embodiment, the first end part 42a1 of the first magnet 42a at the opposite side R2 to the stator 3 is present at the opposite side R2 to the stator 3 with respect to the first end part 42b1 of the second magnet 42b at the opposite side R2 to the stator 3, in the radial direction R. Therefore, the rotor 4 according to the present embodiment can reduce the magnetic flux (magnetic fluxes indicated by arrows f9 and f10 in FIG. 6) densities from the first end part 42a1 of the first magnet 42a and the first end part 42b1 of the second magnet 42b toward the opposite side R2 to the stator 3 in the radial direction R and can increase the magnetic flux (magnetic fluxes indicated by arrows f2 and f4 in FIG. 6) densities in the circumferential direction C from one toward the other of the first end part 42a1 of the first magnet 42a and the first end part 42b1 of the second magnet 42b. As a result, the motor 1 according to the present embodiment can improve the output torque of the motor 1 by increasing the magnetic flux (magnetic fluxes indicated by arrows f3 and f6 in FIG. 6) densities from the second end part 42a2 of the first magnet 42a and the second end part 42b2 of the second magnet 42b toward the stator 3 in the radial direction R.

In the rotor 4 according to the present embodiment, the first end part 42a1 of the first magnet 42a at the opposite side R2 to the stator 3 is present at the opposite side R2 to the stator 3 with respect to the first end part 42c1 of the third magnet 42c at the opposite side R2 to the stator 3, in the radial direction R. Therefore, the rotor 4 according to the present embodiment can reduce the magnetic flux (magnetic fluxes indicated by arrows f8 and f10 in FIG. 6) densities from the first end part 42a1 of the first magnet 42a and the first end part 42c1 of the third magnet 42c toward the opposite side R2 to the stator 3 in the radial direction R and can increase the magnetic flux (magnetic fluxes indicated by arrows f1 and f5 in FIG. 6) densities in the circumferential direction C from one toward the other of the first end part 42a1 of the first magnet 42a and the first end part 42c1 of the third magnet 42c. As a result, the motor 1 according to the present embodiment can improve the output torque of the motor 1 by increasing the magnetic flux (magnetic fluxes indicated by arrows f3 and f7 in FIG. 6) densities from the second end part 42a2 of the first magnet 42a and the second end part 42b2 of the third magnet 42c toward the stator 3 in the radial direction R.

In the rotor 4 according to the present embodiment, the second end part 42a2 of the first magnet 42a at the stator side R1 is present at the opposite side R2 to the stator 3 with respect to the second end part 42b2 of the second magnet 42b at the stator side R1, in the radial direction R.

In the rotor 4 according to the present embodiment, the second end part 42a2 of the first magnet 42a at the stator side R1 is present at the opposite side R2 to the stator 3 with respect to the second end part 42c2 of the third magnet 42c at the stator side R1, in the radial direction R.

In the rotor 4 according to the present embodiment, the yoke 41 includes the hole 412 and the frame 413 surrounding the hole 412, the first magnet 42a is present inside the hole 412, and in the circumferential direction C, the space 412s is present between the second inner surface 412f2 of the hole 412 and the side surface 42a3 of the first magnet 42a. In addition, a nonmagnetic material having a magnetic permeability smaller than the magnetic permeability of the magnetic material forming the yoke 41 exists in the space 412s. Therefore, in the circumferential direction C, at the part with the space 412s, the magnetic fluxes from the side surface 42a3 of the first magnet 42a toward the side surface 42b3 of the second magnet 42b and the side surface 42c3 of the third magnet 42c are suppressed by the nonmagnetic material. As a result, the magnetic flux densities increase between the first end part 42a1 of the first magnet 42a and the first end part 42b1 of the second magnet 42b, and between the first end part 42a1 of the first magnet 42a and the first end part 42c1 of the third magnet 42c. Therefore, the motor 1 according to the present embodiment can increase the magnetic flux density from the first magnet 42a toward the stator 3.

In the rotor 4 according to the present embodiment, the surface area of the side surface 42b3 of the second magnet 42b extending in the radial direction R is S1, and the surface area of the surface at the stator side R1 of the yoke 41 in the rotor 4 is S2. The surface extends in the circumferential direction C. Moreover, when the number of magnetic poles of the rotor 4 (60 in the rotor 4 according to the present embodiment) is P, the rotor 4 according to the present embodiment satisfies S1 > S2/P. Therefore, in order to widen the surface area S1 of the side surface 42b3 of the second magnet 42b as much as possible, a size L20 in the radial direction R of the second magnet 42b can be lengthened as much as possible.

The rotor 4 according to the present embodiment satisfies W2 ≥ W1 > W3, where the width of the first magnet 42a is W1 in the circumferential direction C, the width of the second magnet 42b is W2 in the circumferential direction C, and the width of the frame 413 is W3 in the circumferential direction C. Therefore, by narrowing the width W3 of the frame 413, the rotor 4 according to the present embodiment can saturate the magnetic flux between the side surface 42a3 of the first magnet 42a and the side surface 42b3 of the second magnet 42b, in the circumferential direction C. As a result, by increasing the magnetic flux density between the first end part 42a1 of the first magnet 42a and the first end part 42b1 of the second magnet 42b, the motor 1 according to the present embodiment can increase the magnetic flux densities from the first magnet 42a and the second magnet 42b toward the stator 3. Furthermore, by narrowing the width W3 of the frame 413 as much as possible, the size of the yoke 41 in the radial direction R can be reduced.

The rotor 4 according to the present embodiment satisfies W30 ≥ W1 > W3, where the width of the first magnet 42a is W1 in the circumferential direction C, the width of the third magnet 42c is W30 in the circumferential direction C, and the width of the frame 413 is W3 in the circumferential direction C. Therefore, by narrowing the width W3 of the frame 413, the rotor 4 according to the present embodiment can saturate the magnetic flux between the side surface 42a3 of the first magnet 42a and the side surface 42c3 of the third magnet 42c, in the circumferential direction C. As a result, by increasing the magnetic flux density between the first end part 42a1 of the first magnet 42a and the first end part 42c1 of the third magnet 42c, the motor 1 according to the present embodiment can increase the magnetic flux densities from the first magnet 42a and the third magnet 42c toward the stator 3. Furthermore, by narrowing the width W3 of the frame 413 as much as possible, the size of the yoke 41 in the radial direction R can be reduced.

Note that the stator 3 according to the above-described embodiment including the 18 teeth 31b has been described. However, the number of teeth 31b of the stator 3 according to the present embodiment is not limited to 18 and can be set to any number.

The stator 3 according to the above-described embodiment including the 18 coils 32 has been described. However, the number of coils 32 of the stator 3 according to the present embodiment is not limited to 18 and can be set to any number.

Furthermore, the rotor 4 according to the above-described embodiment including the 20 first magnets 42a, the 20 second magnets 42b, and the 20 third magnets 42c has been described. However, the numbers of the magnets 42a, 42b, and 42c are not limited to 20, and can be set to any numbers.

Note that the rotor 4 according to the above-described embodiment with both side surfaces 42a3 of the first magnet 42a being inclined with respect to the second inner surface 412f2 of the hole 412 by the side surface 42a3 of the first magnet 42a being parallel to the center line 1CL, and the second inner surface 412f2 of the hole 412 being inclined with respect to the center line 1CL has been described. However, the rotor 4 according to the present embodiment is not limited to the above-described configuration. For example, the side surface 42a3 of the first magnet 42a may be inclined with respect to the center line 1CL while the second inner surface 412f2 of the hole 412 may be parallel to the center line 1CL, and thus the both side surfaces 42a3 of the first magnet 42a may be inclined relative to the second inner surface 412f2 of the hole 412. The side surface 42a3 of the first magnet 42a may be inclined with respect to the center line 1CL and the second inner surface 412f2 of the hole 412 may be inclined with respect to the center line 1CL, and thus the both side surfaces 42a3 of the first magnet 42a may be inclined relative to the second inner surface 412f2 of the hole 412.

Furthermore, as the embodiment described above, the rotor 4 including the first magnet 42a having a cuboid shape, the rotor 4 including the second magnet 42b having a cuboid shape, and the rotor 4 including the third magnet 42c having a cuboid shape has been described. However, the shapes of the magnets 42a, 42b, and 42c according to the present embodiment are not limited to the cuboid shape and may be formed in other shapes.

In the embodiment described above, the hole 412 formed to have the three pairs of inner surfaces 412f1, 412f3, and 412f3 opposing each other when viewed from the axial direction A has been described. However, the shape of the hole 412 according to the present embodiment is not limited to the above-described configuration and may be formed in another shape.

### First Variation of First Embodiment

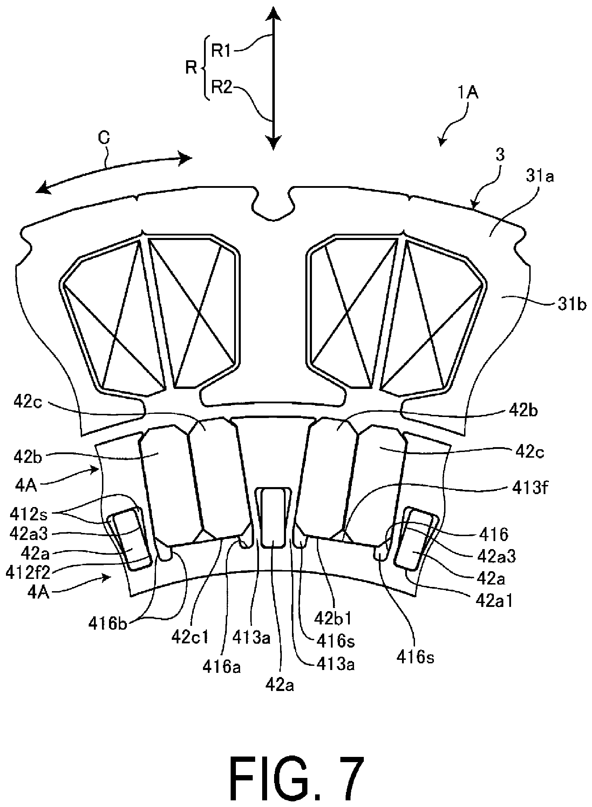

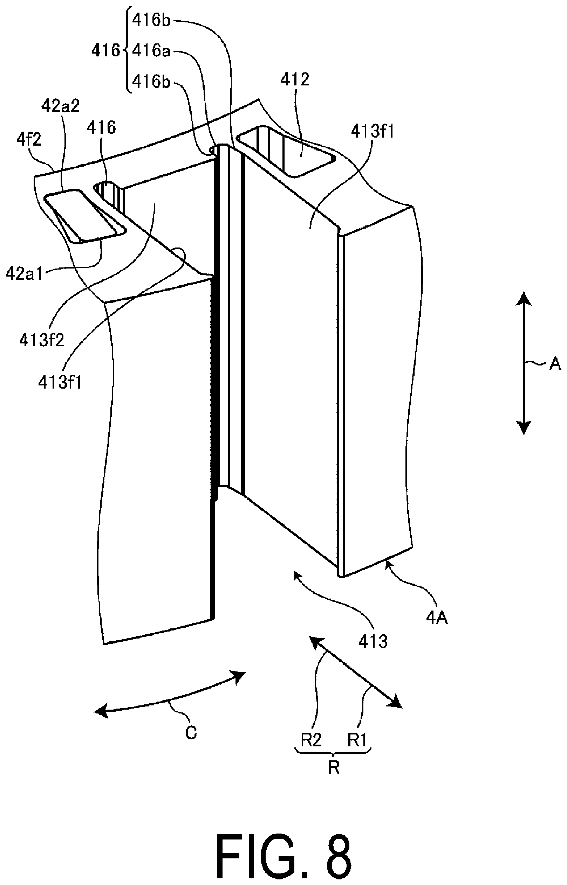

Next, a motor 1A according to the first variation of the first embodiment will be described with reference to FIGS. 7 and 8. FIG. 7 is a plan view of the motor 1A according to the first variation of the first embodiment. FIG. 8 is a perspective view of a rotor 4A included in the motor 1A illustrated in FIG. 7.

The frame 413 in the yoke 41 of the rotor 4A according to the present variation includes the second inner surface 413f2 orthogonal to the radial direction R as illustrated in FIG. 8, similarly to the frame 413 in the yoke 41 of the rotor 4 of the first embodiment. In the rotor 4A according to the present variation, a recess part 416 is formed in the frame 413. Two recess parts 416 are formed for one frame 413, and two recess parts are formed on the second inner surface 413f2 constituting the frame 413. More specifically, the recess part 416 is formed to extend in the radial direction R along the first inner surface 413f1.

Each of the recess parts 416 includes, in the frame 413, a first inner surface 416a positioned at the opposite side R2 to the stator 3, and a pair of second inner surfaces 416b positioned on both sides in the circumferential direction C of the first inner surface 416a and opposing each other in the circumferential direction C. As illustrated in FIG. 7, such recess parts 416 are arranged at both sides in the circumferential direction C with respect to the side surfaces 42a3 of the first magnet 42a. More specifically, the recess parts 416 are arranged at both sides in the circumferential direction C with respect to the side surfaces 42a3 of the first magnet 42a. The second inner surfaces 412f2 of the hole 412 come into contact with the side surfaces 42a3 of the first magnet 42a. In the circumferential direction C, a part of the frame 413 is present between the recess part 416 and the first magnet 42a.

The second magnet 42b and the third magnet 42c are arranged inside the frame 413. The length in the circumferential direction C of the recess part 416 is shorter than 1/2 of the length in the circumferential direction C of the frame 413. Therefore, a part of the first end part 42b1 of the second magnet 42b and a part of the first end part 42c1 of the third magnet 42c come into contact with the second inner surface 413f2 of the frame 413.

In other words, the yoke 41 according to the present variation includes the second inner surface 413f2 opposing the surface of the first end part 42b1 at the opposite side R2 to the stator 3 of the second magnet 42b, in the radial direction R. The second inner surface 413f2 opposing the surface of the first end part 42b1 at the opposite side R2 to the stator 3 of the second magnet 42b is provided with the recess part 416. There is a space 416s between the surface of the first end part 42b1 at the opposite side R2 to the stator 3 of the second magnet 42b and the recess part 416. Note that although the second magnet 42b has been described above, the same applies to the third magnet 42c.

Air exists in the space 416s described above. The air is a nonmagnetic material, and the magnetic permeability of the air is smaller than the magnetic permeability of the magnetic material forming the yoke 41. That is, the air existing in the space 416s functions as a flux barrier suppressing the magnetic flux from the side surface 42b3 of the second magnet 42b toward the side surface 42a3 of the first magnet 42a and the magnetic flux from the side surface 42c3 of the third magnet 42c toward the side surface 42a3 of the first magnet 42a, in the circumferential direction C. Alternatively, the air existing in the space 416s functions as a flux barrier suppressing the magnetic flux from the side surface 42a3 of the first magnet 42a toward the side surface 42b3 of the second magnet 42b and the magnetic flux from the side surface 42a3 of the first magnet 42a toward the side surface 42c3 of the third magnet 42c, in the circumferential direction C.

In the rotor 4A according to the present variation, either the space 412s or the space 416s is arranged at the side in the circumferential direction C of the side surface 42a3 of the first magnet 42a.

In the rotor 4A according to the present variation, the yoke 41 is provided with the recess part 416, and the space 416s is present between the surface of the first end part 42b1 at the opposite side R2 to the stator 3 of the second magnet 42b and the recess part 416. In addition, a nonmagnetic material having a magnetic permeability smaller than the magnetic permeability of the magnetic material forming the yoke 41 exists in the space 416s. Therefore, in the circumferential direction C, at the part with the space 416s, the magnetic fluxes from the side surface 42a3 of the first magnet 42a toward the side surface 42b3 of the second magnet 42b and the side surface 42c3 of the third magnet 42c are suppressed by the nonmagnetic material. As a result, the magnetic flux densities increase between the first end part 42a1 of the first magnet 42a and the first end part 42b1 of the second magnet 42b, and between the first end part 42a1 of the first magnet 42a and the first end part 42c1 of the third magnet 42c. Therefore, the motor 1A according to the present variation can increase the magnetic flux density from the first magnet 42a toward the stator 3.

In the rotor 4A according to the present variation, either the space 412s or the space 416s is arranged at the side in the circumferential direction C of the side surface 42a3 of the first magnet 42a. Therefore, the rotor 4A according to the present variation can reduce the magnetic flux density between the side surface 42a3 of the first magnet 42a and the side surface 412b3 of the second magnet 42b, and the magnetic flux density between the side surface 42a3 of the first magnet 42a and the side surface 412c3 of the third magnet 42b. As a result, the motor 1A according to the present variation can increase the magnetic flux densities from the second end part 42a2 of the first magnet 42a, the second end part 42b2 of the second magnet 42b, and the second end part 42c2 of the third magnet 42c toward the stator 3, and therefore the motor 1A can improve the output torque of the motor 1A.

### Second Embodiment

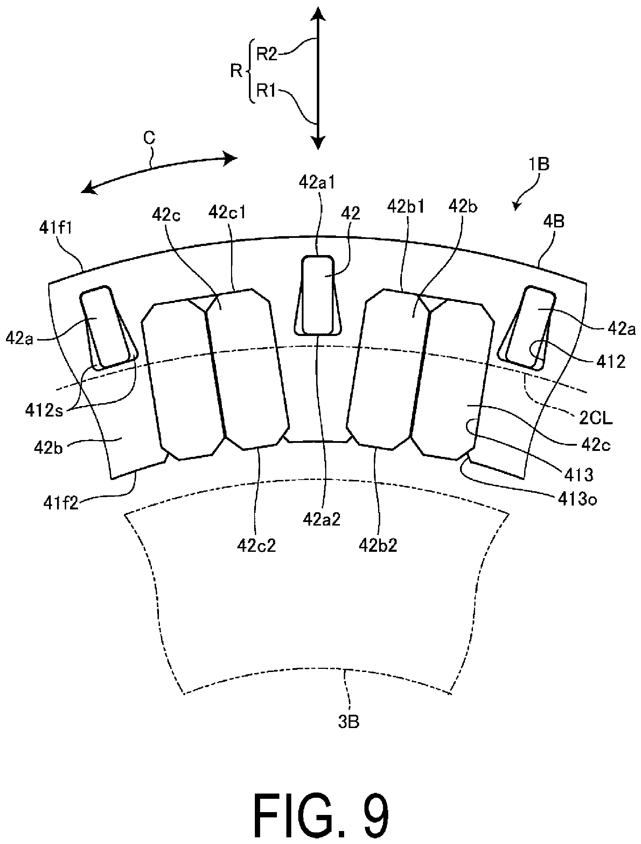

Next, a motor 1B according to the second embodiment will be described with reference to FIG. 9. FIG. 9 is a plan view illustrating a part of the motor 1B according to the second embodiment. Note that in the configuration of the motor 1B according to the second embodiment, the same configurations as the configurations of the motor 1 according to the first embodiment are denoted by the same reference signs, and the description of the same reference signs will be omitted.

In the motor 1B according to the second embodiment, when viewed from the axial direction A, with respect to the rotor 4, a stator 3B is positioned inside the rotor 4 in the radial direction R, and a shaft not illustrated is positioned inside the rotor 4 in the radial direction R. That is, the motor 1B according to the second embodiment is an outer rotor type brushless motor.

In the motor 1B according to the present embodiment, the inside in the radial direction R is called the stator side R1, and the outside in the radial direction R is called the opposite side R2 to the stator 3B. Therefore, in FIG. 9, the stator side in the radial direction R is indicated by R1, and the opposite side to the stator 3B in the radial direction R is indicated by R2. In the motor 1B according to the present embodiment, the shaft not illustrated and a rotor 4B are formed as separate bodies.

In the motor 1B in the present embodiment, the hole 412, the frame 413, the first magnet 42a, the second magnet 42b, and the third magnet 42c are arranged with the outside and the inside in the radial direction R being reversed with respect to the arrangement of the hole 412, the frame 413, the first magnet 42a, the second magnet 42b, and the third magnet 42c of the motor 1 in the first embodiment, with reference to a center line 2CL in the radial direction R of the rotor 4B.

More specifically, the hole 412 is arranged closer to the outer peripheral surface 41f1 than the inner peripheral surface 41f2 of the yoke 41 in the radial direction R.

The frame 413 is arranged with the opening 413o being formed at the inner peripheral surface 41f2. That is, the frame 413 is arranged at the stator side R1 side in the radial direction R of the yoke 41.

Furthermore, the first magnet 42a is arranged closer to the outer peripheral surface 41f1 than the inner peripheral surface 41f2 of the yoke 41 in the radial direction R. In the first magnet 42a, the first end part 42a1 is arranged at the opposite side R2 to the stator 3B, and the second end part 42a2 is arranged at the stator side R1.

The second magnet 42b is arranged to be partially exposed from the opening 413o positioned at the stator side R1 side in the radial direction R. Furthermore, in the second magnet 42b, the first end part 42b1 is arranged at the opposite side R2 to the stator 3B, and the second end part 42b2 is arranged at the stator side R1.

The third magnet 42c is arranged to be partially exposed from the opening 413o positioned at the stator side R1 in the radial direction R. Furthermore, in the third magnet 42c, the first end part 42c1 is arranged at the opposite side R2 to the stator 3B, and the second end part 42c2 is arranged at the stator side R1.

In the motor 1B according to the second embodiment, by arranging the hole 412, the frame 413, the first magnet 42a, the second magnet 42b, and the third magnet 42c as described above, actions and effects similar to the actions and effects of the motor 1 according to the first embodiment can be achieved.

Although the description has been given based on the embodiments and the variations of the motor 1 according to the present invention, the present invention is not limited to the embodiments, and it goes without saying that various variations can be made without departing from the gist of the present invention. The present invention also includes configurations made by appropriately combining the constituent elements of the above-described embodiments or variations. Various variations without departing from such gist are also included in the technical scope of the present invention, and this is apparent to those skilled in the art from the description of the claims.

### Reference Signs List

1, 1A, 1B Motor, 2 Shaft, 3, 3B Stator, 4, 4A, 4B Rotor, 41 Yoke, 412 Hole, 412f2 Second inner surface (inner surface), 412s Space, 413 Frame, 413f2 Second inner surface (inner surface), 416 Recess part, 42a First magnet, 42a1 First end part (end part), 42a2 Second end part (end part), 42a3 Side surface, 42b Second magnet, 42b1 First end part (end part), 42b2 Second end part (end part), 42c3 Side surface, 42c Third magnet, A Axial direction, C Circumferential direction, R Radial direction, R1 Stator side in radial direction, R2 Opposite side to stator 3, 3B in radial direction

## Claims

1. A motor comprising:
a shaft;
a rotor; and
a stator,
wherein the rotor includes
a yoke, and
a first magnet and a second magnet arranged in a circumferential direction,
the first magnet and the second magnet are present inside the yoke, and
an end part of the first magnet at an opposite side to the stator is present at an opposite side to the stator with respect to an end part of the second magnet at an opposite side to the stator, in a radial direction.

2. The motor according to claim 1 comprising:
a third magnet inside the yoke,
wherein the first magnet and the third magnet are arranged adjacent to each other in the circumferential direction, and
an end part of the first magnet at the stator side is present at an opposite side to the stator with respect to an end part of the second magnet at the stator side, in a radial direction.

3. The motor according to claim 1 or 2, wherein
the yoke includes a hole and a frame surrounding the hole,
the first magnet is present inside the hole, and
a space is present between an inner surface of the hole and a side surface of the first magnet, in the circumferential direction.

4. The motor according to claim 3, wherein
the side surface of the first magnet is inclined with respect to the inner surface of the hole.

5. The motor according to claim 1 or 2, wherein
the first magnet includes an end part at the stator side and an end part at an opposite side to the stator, in the radial direction,
the second magnet includes an end part at the stator side and an end part at an opposite side to the stator, in the radial direction, and
L1/2 > L2 is true,
where a size of the first magnet in the radial direction is L1, and
a length from a position of the end part at an opposite side to the stator of the first magnet to a position of the end part at an opposite side to the stator of the second magnet, in the radial direction, is L2.

6. The motor according to claim 1 or 2, wherein
S1 > S2/P is true,
where a surface area of a side surface of the second magnet extending in the radial direction is S1,
a surface area of a surface at the stator side of the rotor is S2, the surface extending in the circumferential direction, and
the number of magnetic poles of the rotor is P.

7. The motor according to claim 1 or 2, wherein
S1/2 > S3 is true,
where a surface area of a surface at the stator side of the first magnet is S3, the surface extending in the circumferential direction.

8. The motor according to claim 1 or 2, wherein
the yoke includes a hole and a frame surrounding the hole,
the first magnet is present inside the hole, and
W2 ≥ W1 > W3 is true,
where a width of the first magnet in the circumferential direction is W1,
a width of the second magnet in the circumferential direction is W2, and
a width of the frame in the circumferential direction is W3.

9. The motor according to claim 1 or 2, wherein
the yoke includes a surface opposing a surface at an opposite side to the stator of the second magnet, in the radial direction,
the surface opposing the surface at an opposite side to the stator of the second magnet is provided with a recess part, and
a space is present between the surface at an opposite side to the stator of the second magnet and the recess part.

10. The motor according to claim 9, wherein
the surface at an opposite side to the stator of the second magnet is in contact with a part of the surface opposing the surface at an opposite side to the stator of the second magnet.

11. The motor according to claim 9, wherein
the yoke includes a hole and a frame surrounding the hole, and
a part of the frame is present between the recess part and the first magnet, in the circumferential direction.
